# EUROPÄISCHE PATENTSCHRIFT

(11) **EP 4 247 614 B1**
(45) Veröffentlichungstag und Bekanntmachung des Hinweises auf die Patenterteilung: **29.04.2026**
(21) Anmeldenummer: 21836337.2
(22) Anmeldetag: 16.11.2021
(51) Int. Cl.: B29C 48/435, B29C 48/25, B29C 48/38

(54) **EXTRUDERSCHNECKE FÜR EINEN MEHRSCHNECKENEXTRUDER**
EXTRUDER SCREW FOR A MULTI-SCREW EXTRUDER
VIS D'EXTRUSION POUR EXTRUDEUSE MULTIVIS

(30) Priorität: 17.11.2020 DE 102020130368
(43) Veröffentlichungstag der Anmeldung: 27.09.2023
(73) Patentinhaber: Gneuss GmbH, 32549 Bad Oeynhausen (DE)
(72) Erfinder: GNEUSS, Daniel, Charlotte, NC 28277 (US); GNEUSS, Detlef, 6919 Carabietta (CH); GNEUSS, Stephan, 32547 Bad Oeynhausen (DE)
(74) Vertreter: Tarvenkorn, Oliver
(86) Internationale Anmeldenummer: PCT/DE2021/100910
(87) Internationale Veröffentlichungsnummer: WO 2022/105963

(56) Entgegenhaltungen:
- WO-A1-2020/099684
- DE-A1- 102017 111 275
- DE-B3- 102013 003 380

## Beschreibung

Die Erfindung betrifft eine Extruderschnecke für einen Mehrschneckenextruder mit den Merkmalen des Oberbegriffs des Anspruchs 1.

Für die Aufbereitung von Kunststoffschmelze, insbesondere Polyester, hat sich ein Multirotationssystem (MRS) bewährt, das in WO 2003 033 240 A1 grundlegend beschrieben ist. Es enthält eine Extruderschnecke, die zwischen einer Eintragszone zum Einziehen und Aufschmelzen des Kunststoffs und einer Austragszone eine sogenannte Polyrotationseinheit mit einer Rotorkörperwelle umfasst. Letztere besitzt einen gegenüber den anderen Zonen deutlich vergrößerten Durchmesser und außerdem mehrere rotierende Satellitenschnecken. Mit dem Multirotationssystem wird eine signifikante Erhöhung der Entgasungsleistung gegenüber Ein- und Doppelschneckensystem erreicht. Folglich kann die Verweilzeit der Schmelze in der Polyrotationseinheit sehr kurzgehalten werden. Das bekannte Antriebskonzept sieht eine Antriebszone für die Satellitenschnecken vor, die innerhalb des für die Entgasung vorgesehenen Behandlungsraums liegt. Die aus der Meteringzone überführte Schmelze wird durch die Antriebszone hindurchgeführt. In einigen Anwendungsfällen kann der über die dort auftretende Scherung erfolgende Energieeintrag vorteilhaft sein, weil er die Homogenisierung der Kunststoffschmelze begünstigt. Andererseits kann die Scherung des Polymers in der Antriebszone nachteilig für die Produkteigenschaften sein.

Bei dem in DE102017111275A1 beschriebenen Mehrschneckenextruder war beabsichtigt, die Schmelze vollständig durch Öffnungen im Konus direkt in die Antriebszonen der Schnecken zu leiten. Nur ein kleiner Teil, der der Schmierung dient, sollte noch über den Außenumfang abströmen. Der Bereich des Rotorkörpers zwischen dem Konus und der Antriebszone war lang ausgebildet, um den Außenumfang abzudichten. Bei diesem Konzept war es erforderlich, jede einzelne Satellitenschnecke mit einer eigenen Meteringzone zu versehen, um die Aufschmelzung von festen Partikeln zu erreichen, bevor diese in die Antriebszone gelangen. Der weitaus überwiegende Teil der Schmelze wird direkt über stirnseitige Öffnungen im Konus auf die Antriebsritzel geleitet und dort einer starken Scherwirkung unterworfen.

Bei einem Mehrschneckenextruder nach DE102013003380B3 sind die Antriebsritzel direkt hinter dem Konus platziert. Die Option, Bypasskanäle vorzusehen, wird mit einer Druckreduzierung begründet. Die Position der Bypasskanäle wird nur vage bezeichnet. Der Führungskörper erstreckt sich zwischen Eingangskonus und Ausgangskonus und soll auch noch zweiteilig sein. Die Bypasskanäle sollen im Querschnitt einstellbar sein, ohne dass Angaben folgen, wie die Einstellbarkeit realisierbar sein könnte. Es gibt deshalb keine konkrete Offenbarung zu Lage und Ausbildung der Bypasskanäle, sondern allenfalls die Anregung, dass solche zum Zwecke der Druckreduzierung vorzusehen wären.

Die Aufgabe der Erfindung besteht somit darin, eine Extruderschnecke für ein MRS-System bzw. einen damit ausgerüsteten Mehrschneckenextruder so zu verbessern, dass das damit verarbeitete Polymer weniger durch Scherung beeinflusst wird.

Die Lösung nach der vorliegenden Erfindung besteht in einer Extruderschnecke mit den Merkmalen des Anspruchs 1 bzw. einen Mehrschneckenextruder mit den Merkmalen des Anspruchs 5gelöst.

Nach der Erfindung wird ein wesentlicher Anteil des Schmelzestroms in der Antriebszone nicht über die Antriebsritzel geführt, über die die Satellitenschnecken angetrieben sind, sondern in geschlossenen Umströmungskanälen, die innerhalb eines Stützlagerelements für die Satellitenschnecken ausgebildet sind und an den Antriebsritzeln vorbeiführen. Daraus ergibt sich als Vorteil, dass die Schmelze nicht durch Scherung erwärmt wird. Es ist z.B. bei der Verarbeitung von Polyester (PET) vorteilhaft, wenn die Schmelze nicht vollständig durchplastifiziert ist und damit relativ kühl ist, um einen übermäßigen Abbau der Schmelze schon im Eintragsbereich zu vermeiden.

Für die Extruderschnecke selbst ergibt sich als weiterer Vorteil, dass die Gefahr ihrer Beschädigung bei Kontaminationen der Schmelze reduziert wird. Die Schnecken können in Gleitlagerbuchsen vor und hinter dem Antriebsritzel gelagert werden.

Durch die Lagerung wird vermieden, dass die Zahnköpfe der Antriebsritzel in Kontakt mit dem Grund der Nuten des Stützlagerelement stehen. Damit wird ein möglicher Verschleiß vermieden.

Für die Wirksamkeit der Umströmungskanäle ist wichtig, dass diese groß genug gewählt werden, damit ein Hauptanteil des Volumenstroms mit der Extruderschnecke geförderten und behandelten Polymers nicht durch die Antriebszone geleitet wird. Ein ausreichender Querschnitt ist auch wichtig, um zu verhindern, dass nicht vollständig plastifiziertes Material der Eintragsschnecke die Kanäle verstopft und zu hohem Druckabfall führt. Beides bewirkt einen hohen Kopfdruck am Ende des Eintrags und damit einen deutlich höheren Energieeintrag und bewirkt so eine Schädigung der Schmelze.

Konkret sollten die Kanäle in jeder Dimension mindestens 5 mm freien Querschnitt bieten, vorzugsweise 8 mm bis 10 mm.

Der Ringspalt zwischen der Außenseite des Stützlagerelement und der Innenseite der Extruderbohrung im Gehäuse sollte eine radiale Weite von vorzugsweise 1 mm bis 3 mm und maximal 5 mm besitzen. Bei einem Durchmesser von 130 mm beispielsweise wird der Ringspalt mit 1,6 mm bis 2,0 mm bemessen.

Vorzugsweise ist die Geometrie so bemessen, dass zwischen dem Außenumfang der Extruderschnecke im Antriebszone und dem Innenumfang der Extruderbohrung ein Ringspalt ausgebildet ist, dessen Querschnittsfläche maximal 20% der Summe aller Querschnittsflächen der Umströmungskanäle beträgt. Somit wird der weitaus größere Anteil über die Umströmungskanäle an den Antriebsritzeln vorbeigeleitet.

Dadurch wird vorgegeben, dass nur ein kleiner Volumenstrom über den Außenumfang strömt, damit das Polymer als Schmierstoff in der Antriebszone wirken kann, während sich der größere Anteil des Volumenstroms auf die Umströmungskanäle aufteilt und somit keine Scherung in der Antriebszone erfährt. Es ist außerdem vorteilhaft, wenn die Größe des Ringspalts so klein gewählt wird, dass Fremdkörper im Schmelzestrom zurückgehalten werden, die eine solche Größe haben, dass sie zu einer nennenswerten mechanischen Beschädigung der Verzahnung führen kann.

Die Erfindung wird nachfolgend anhand eines Ausführungsbeispiels und mit Bezug auf die Zeichnungen näher erläutert. Die Figuren zeigen im Einzelnen:
- Fig. 1: Teile einer Extruderschnecke in perspektivischer Ansicht:
- Fig. 2: eine perspektivische Ansicht auf das Satellitenschneckenträgerelement;
- Fig. 3: Teile der Extruderschnecke in perspektivischer Ansicht; und
- Fig. 4: Teile eines Mehrschneckenextruder in seitlicher Schnittansicht und
- Fig. 5: Teile des Mehrschneckenextruders in perspektivischer Schnittansicht.

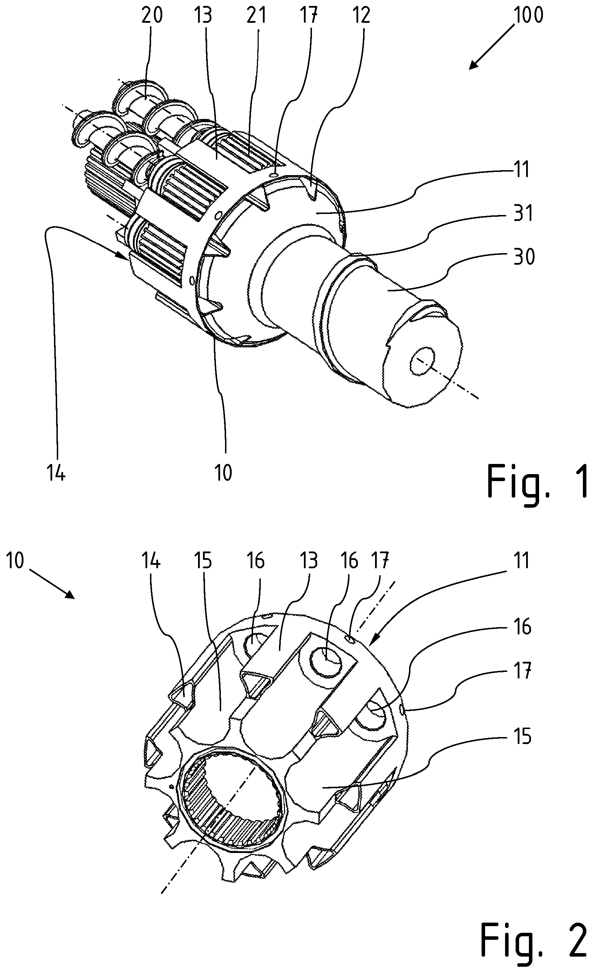

In Figur 1 sind Teile einer Extruderschnecke 100 für einen Mehrschneckenextruder perspektivisch dargestellt, und zwar ist hier der Übergangsbereich zwischen einem Einzugs- und Meteringabschnitt 30 mit einem Schneckensteg 31 und einer Multischneckensektion mit mehreren Satellitenschnecken 20 gezeigt. Dazwischen ist ein Konus 11 ausgebildet, an welchem sich der Durchmesser der Extruderschnecke in Fließrichtung erweitert. Der Konus 11 ist Teil eines Stützlagerelements 10. In diesem sind die jeweils mit einem Antriebsritzel 21 versehenen Endabschnitte mehrerer Satellitenschnecken 20 gelagert. Zwischen benachbarten Antriebsritzeln 21 ist jeweils ein länglicher, axialer Abschnitt des Stützlagerelements 10 vorgesehen, in welchem ein am Umfang geschlossener, rohrförmiger Umströmungskanal 13 ausgebildet ist. Der Umströmungskanal 13 erstreckt sich von einer Eingangsöffnung 12 am Konus 11 bis zu einer Ausgangsöffnung 14, die in axialer Erstreckung der Extruderschnecke gesehen jenseits der Antriebsritzel 21 angeordnet ist.

Figur 2 ist eine perspektivische Ansicht auf das Stützlagerelement 10 von der Rückseite her gesehen. Dieses besitzt für jede Satellitenschnecke eine Nut 15, in welcher das Antriebsritzel gelagert ist, und eine Lageraufnahme 16 vor Kopf, in die ein Lagerabsatz der Satellitenschnecke oder des Antriebsritzels einsetzbar ist. Die Schmierung der Lager der Satellitenschnecken wie der Antriebsritzel erfolgt über das mit der Extruderschnecke geförderte, geschmolzene Polymer. Da die Lageraufnahmen 16 durch den rückwärtigen Konus 11 von der Strömung abgeschirmt sind, sind Bohrungen 17 vorgesehen, die sich jeweils bis in die Lageraufnahme 16 erstrecken.

In Figur 2 ist ein dreieckiger bzw. trapezförmiger Querschnitt der rohrförmigen Umströmungskanäle 13 deutlich erkennbar. Dadurch, dass die Spitze der dreieckigen Querschnittsfläche bzw. die Schmalseite des Trapezes zur Mittelachse weist und die breite Basis des Dreiecks am Außenumfang liegt, wird der Platz zwischen den Nuten 15 für die Antriebsritzel optimal ausgenutzt. Die Ausgangsöffnungen 14 der Umströmungskanäle 13 befinden sich jeweils nicht am Ende des Stützlagerelements 10; vielmehr erstrecken sich die Umströmungskanäle 13 axial nur etwa so weit, wie die Antriebsritzel reichen.

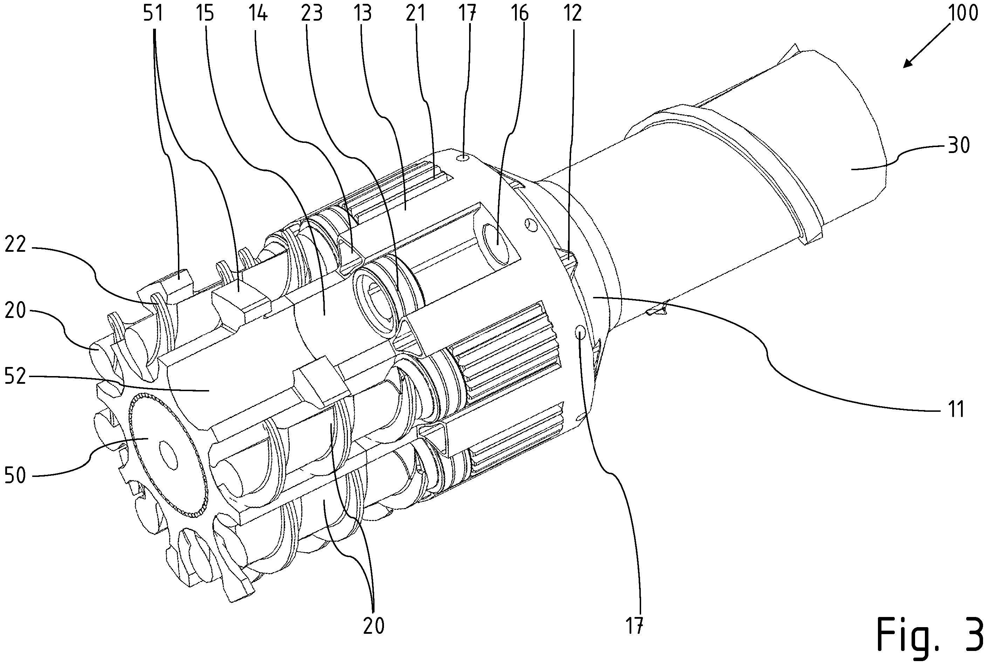

Der Vorteil dieser Anordnung ergibt sich aus Figur 3. Dort ist die Extruderschnecke mit dem Einzugs- und Meteringabschnitt 30, dem Satellitenschneckenträgerelement 10 und den Satellitenschnecken 20 perspektivisch dargestellt. Zusätzlich ist ein Teil eines Rotorkörpers 50 gezeigt, der sich an das Satellitenschneckenträgerelement 10 anschließt. Der Rotorkörper 50 ist real wesentlich länger als dargestellt und erstreckt sich über die gesamte Länge der Satellitenschnecken 20. Die Nuten 15 des Stützlagerelements 10 setzen sich jeweils in Nuten 52 am Rotorkörper 50 fort, die den gleichen Querschnitt haben. Die Satellitenschnecken 20 sind darin geführt, wobei sie mit der Außenseite offen liegen. Der Rotorkörper 50 besitzt zwischen den Nuten 52 jeweils Teile eines eigenen Hauptschneckenstegs 51. Dadurch, dass die Ausgangsöffnungen 14 nicht bis zum Ende des Stützlagerelements 10 reichen, gelangt die aus der Ausgangsöffnung 14 herausquellende Schmelze direkt seitlich in den Einzugsbereich der Stege 22 an den Satellitenschnecken und des Hauptschneckenstegs 51.

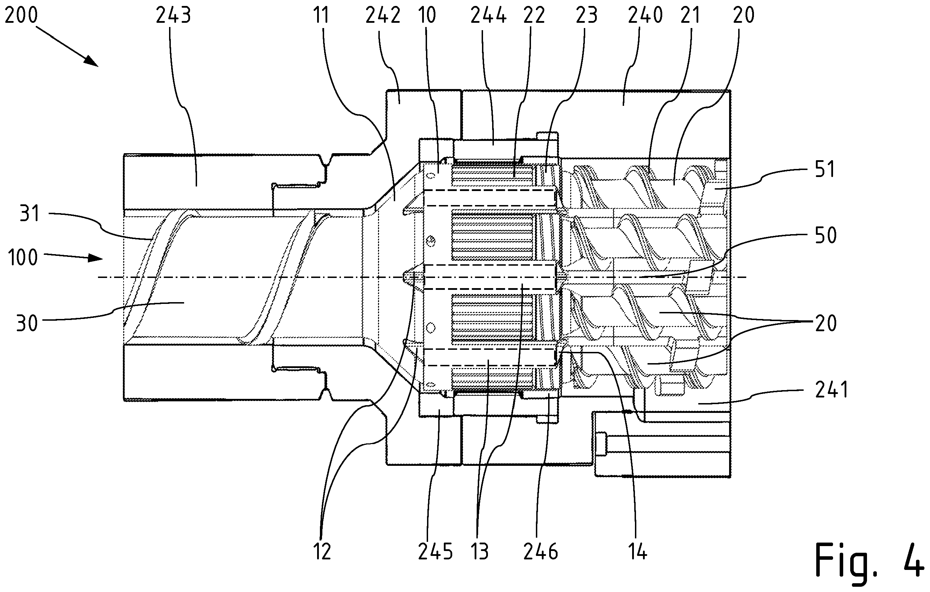

Fig. 4 zeigt Teile eines Mehrschneckenextruders 200 in seitlicher Schnittansicht. Dargestellt ist der gleiche Abschnitt der Extruderschneckenwelle 100 wie in Figur 3, welche in einem Extrudergehäuse 240 mit einer Extruderbohrung 241 rotierbar gelagert ist. Das Extrudergehäuse 240 besitzt ein Gehäuseteil 242 zur Aufnahme des Konus 11 und ein Gehäuseteil 243 mit reduziertem Durchmesser zur Aufnahme des Einzugs- und Meteringabschnitts 30 der Extruderschnecke 100.

In der Antriebszone ist ein Statorring 244 in die Extruderbohrung 241 eingesetzt, der eine Innenverzahnung besitzt, in die die Antriebsritzel 21 der Satellitenschnecken 20 eingreifen. Außerdem ist ein Stauring 245 eingesetzt, um den Ringspalt zwischen der Gehäuseinnenwandung und dem Außenumfang der Extruderschnecke 100 an dieser Stelle zu begrenzen und in seiner Weite einstellen zu können.

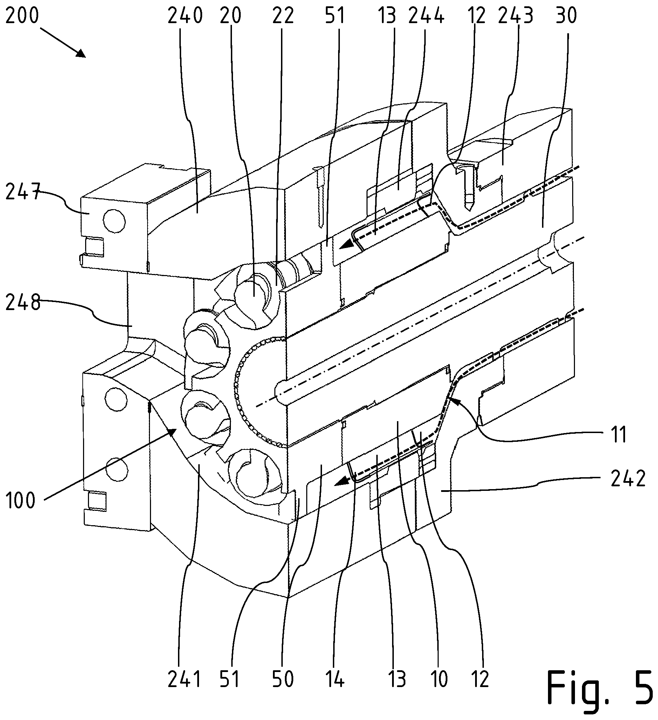

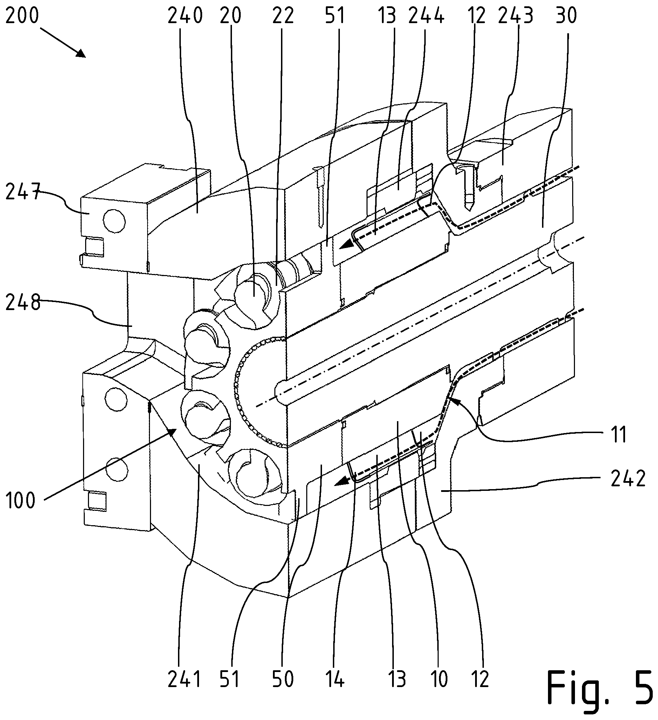

Figur 5 zeigt den Mehrschneckenextruder 200 nochmals in perspektivischer Schnittansicht. Er ist als Entgasungsextruder ausgebildet. Das Extrudergehäuse 240 umfasst daher neben den weiteren Gehäuseteilen 242, 243 noch einen Anschlussflansch 247, der eine Absaugöffnung 248 enthält. Die Absaugöffnung 248 ist gleich zu Beginn des Hauptschneckenstegs 51 der Extruderschneckenwelle 100 angeordnet, das heißt, die Kunststoffschmelze kann bereits nach der Auffächerung am Konus 11 entgast werden. Weitere Absaugöffnungen können sich stromabwärts anschließen.

Der Weg der Kunststoffschmelze von dem Einzugs- und Meteringabschnitt 30 über den Konus 11 durch die Umströmungskanäle 13 ist durch die gestrichelte Pfeillinie markiert. Erkennbar ist, dass ein Großteil der Kunststoffschmelze somit an dem Statorring 244 mit der Verzahnung, in die die hier nicht sichtbaren Antriebsritzel der Satellitenschnecken 20 eingreifen, vorbeifließt.

## Patentansprüche

1. Extruderschnecke (100) für einen Mehrschneckenextruder (200), wenigstens umfassend:
- einen Einzugs- und Meteringabschnitt (30),
- einen im Durchmesser gegenüber dem Einzugs- und Meteringabschnitt (30) vergrößerten Rotorkörper (50), der eine Mehrzahl von Satellitenschnecken (20) aufweist, welche zumindest über einen Teil Ihrer Länge offen liegend am Außenumfang des Rotorkörpers (50) angeordnet sind;
wobei zwischen dem Einzugs- und Meteringabschnitt (30) und dem Rotorkörper (50) ein Konus (11) und eine sich daran anschließende Antriebszone ausgebildet sind, in welcher die Satellitenschnecken (20) jeweils über ein Antriebsritzel (21) in eine Außenverzahnung am Rotorkörper (50) oder in eine Innenverzahnung an einem Statorring (244) oder in der Innenwandung eines Extrudergehäuses (240) des Mehrschneckenextruders (100) eingreifen;
**dadurch gekennzeichnet,**
- **dass** die Antriebszone an einem Stützlagerelement (10) ausgebildet ist, welches für jede Satellitenschnecke (20) je eine Nut (15) zur Aufnahme des Antriebsritzels (21) und/oder eine Lageraufnahme (16) zur Aufnahme eines endseitig an der Satellitenschnecke (20) oder des Antriebsritzels (21) angebrachten Lagerabsatzes oder Lagers aufweist,dass zwischen wenigstens zwei benachbarten Nuten (15) für die Antriebsritzel (21) jeweils ein länglicher, axialer Abschnitt des Stützlagerelements (10) vorgesehen ist, in welchem wenigstens ein am Umfang geschlossener Umströmungskanal (13) ausgebildet ist, der sich von einer Eingangsöffnung (12) am Konus (11) bis zu einer Ausgangsöffnung (14) erstreckt, die in Fließrichtung hinter den Antriebsritzeln (21) angeordnet ist, wobei sich die Umströmungskanäle (13) axial nur so weit erstrecken, wie die Antriebsritzel (21) reichen.

2. Extruderschnecke (100) nach Anspruch 1, **dadurch gekennzeichnet, dass** die Umströmungskanäle (13) wenigstens über einen Teil ihrer Länge rohrförmig mit dreieckigem oder trapezförmigem Querschnitt ausgebildet sind, wobei im Querschnitt eine Spitze des Dreiecks bzw. Schmalseite des Trapezes zur Mittelachse des Stützlagerelements (10) weist und die gegenüberliegende Basis am Außenumfang des Stützlagerelements (10) angeordnet ist.

3. Extruderschnecke (100) nach Anspruch 1 oder 2, **dadurch gekennzeichnet, dass** am Außenumfang des Stützlagerelements (10) je Satellitenschnecke (20) wenigstens eine radiale Bohrung eingebracht ist, die sich bis in die Nut (15) für das Antriebsritzel (21) oder bis in die Lageraufnahme (16) erstreckt.

4. Mehrschneckenextruder (200), wenigstens umfassend ein Extrudergehäuse (240) mit einer Extruderbohrung (241), in der eine Extruderschnecke (100) nach wenigstens einem der vorhergehenden Ansprüche rotierbar gelagert ist.

5. Mehrschneckenextruder (200) nach Anspruch 4, **dadurch gekennzeichnet, dass** zwischen dem Außenumfang der Extruderschnecke (100) in der Antriebszone und dem Innenumfang der Extruderbohrung (241) ein Ringspalt ausgebildet ist, dessen radiale Breite bis zu 5 mm beträgt.

6. Mehrschneckenextruder (200) nach Anspruch 4 oder 5, **dadurch gekennzeichnet, dass** zwischen dem Außenumfang der Extruderschnecke (100) in der Antriebszone und dem Innenumfang der Extruderbohrung (241) ein Ringspalt ausgebildet ist, dessen Querschnittsfläche maximal 20% der Summe aller Querschnittsflächen der Umströmungskanäle (13) beträgt.

7. Mehrschneckenextruder (200) nach einem der Ansprüche 4 bis 6, dass die Innenverzahnung an einem Statorring (244) ausgebildet ist, der in der Antriebszone in die Extruderbohrung (241) eingesetzt ist, und dass in Längsrichtung vor dem Statorring (244) ein den Ringspalt begrenzender Stauring (245) angebracht ist.

## Claims

1. Extruder screw (100) for a multi-screw extruder (200), at least comprising:
- an intake and metering portion (30);
- a rotor body (50) which in terms of the diameter is enlarged in comparison to the intake and metering portion (30) and has a plurality of satellite screws (20) which are disposed on the external circumference of the rotor body (50) so as to lie open on the latter over at least part of their length;
wherein formed between the intake and metering portion (30) and the rotor body (50) are a cone (11) and an adjoining drive zone in which the satellite screws (20) engage in each case by way of a drive pinion (21) in an external toothing on the rotor body (50) or in an internal toothing on a stator ring (244) or in the internal wall of an extruder housing (240) of the multi-screw extruder (100) ;
**characterized**
- **in that** the drive zone is formed on a support bearing element (10) which has in each case for each satellite screw (20) one groove (15) for receiving the drive pinion (21) and/or one bearing receptacle (16) for receiving a bearing shoulder or bearing attached proximal to the end on the satellite screw (20) or the drive pinion (21), in that provided in each case between at least two adjacent grooves (15) for the drive pinions (21) is one elongate axial portion of the support bearing element (10) in which is formed at least one circumferentially closed circulation flow duct (13) extending from an entry opening (12) on the cone (11) to an exit opening (14) which is disposed in the flow direction behind the drive pinions (21), wherein the circulation flow ducts (13) extend axially only as far as the reach of the drive pinions (21).

2. Extruder screw (100) according to Claim 1, **characterized in that** the circulation flow ducts (13) are configured to be tubular with a triangular or trapezoidal cross section at least over part of their length, wherein when viewed in the cross section, a tip of the triangle, or narrow side of the trapezoid, points towards the central axis of the support bearing element (10), and the opposite base is disposed on the external circumference of the support bearing element (10).

3. Extruder screw (100) according to Claim 1 or 2, **characterized in that** incorporated on the external circumference of the support bearing element (10) of each satellite screw (20) is at least one radial bore which extends into the groove (15) for the drive pinion (21) or into the bearing receptacle (16).

4. Multi-screw extruder (200), at least comprising an extruder housing (240) with an extruder bore (241) in which an extruder screw (100) according to at least one of the preceding claims is rotatably mounted.

5. Multi-screw extruder (200) according to Claim 4, **characterized in that** formed between the external circumference of the extruder screw (100) in the drive zone and the internal circumference of the extruder bore (241) is an annular gap, the radial width of the latter being up to 5 mm.

6. Multi-screw extruder (200) according to Claim 4 or 5, **characterized in that** formed between the external circumference of the extruder screw (100) in the drive zone and the internal circumference of the extruder bore (241) is an annular gap, the cross-sectional area of the latter being at most 20% of the sum of all cross-sectional areas of the circulation flow ducts (13).

7. Multi-screw extruder (200) according to one of Claims 4 to 6, **characterized in that** the internal toothing is formed on a stator ring (244) which is inserted into the extruder bore (241) in the drive zone, and **in that** a baffle ring (245) delimiting the annular gap is attached in the longitudinal direction in front of the stator ring (244).

## Revendications

1. Vis d'extrudeuse (100) pour une extrudeuse à plusieurs vis (200), comprenant au moins :
- un tronçon d'alimentation et de dosage (30),
- un corps de rotor (50) agrandi en diamètre par rapport au tronçon d'alimentation et de dosage (30), qui présente une pluralité de vis satellites (20), lesquelles sont disposées au moins sur une partie de leur longueur à découvert sur la circonférence extérieure du corps de rotor (50) ;
un cône (11) et une zone d'entraînement s'y raccordant étant formés entre le tronçon d'alimentation et de dosage (30) et le corps de rotor (50), les vis satellites (20) s'engrenant respectivement par l'intermédiaire d'un pignon d'entraînement (21) dans une denture extérieure sur le corps de rotor (50) ou dans une denture intérieure sur une bague de stator (244) ou dans la paroi intérieure d'un carter d'extrudeuse (240) de l'extrudeuse à plusieurs vis (100) ;
**caractérisée**
- **en ce que** la zone d'entraînement est formée sur un élément de palier de support (10), lequel présente pour chaque vis satellite (20) respectivement une rainure (15) pour la réception du pignon d'entraînement (21) et/ou un logement de palier (16) pour la réception d'un épaulement de palier ou d'un palier disposé à l'extrémité de la vis satellite (20) ou du pignon d'entraînement (21), en ce que, entre au moins deux rainures (15) voisines pour les pignons d'entraînement (21), un tronçon axial allongé de l'élément de palier de support (10) est respectivement prévu, dans lequel au moins un canal d'écoulement périphériquement fermé (13) est formé, lequel s'étend d'une ouverture d'entrée (12) sur le cône (11) jusqu'à une ouverture de sortie (14) qui est disposée dans la direction d'écoulement derrière les pignons d'entraînement (21), les canaux d'écoulement (13) ne s'étendant axialement que jusqu'à la portée des pignons d'entraînement (21).

2. Vis d'extrudeuse (100) selon la revendication 1, **caractérisée en ce que** les canaux d'écoulement (13) sont formés au moins sur une partie de leur longueur de manière tubulaire avec une section triangulaire ou trapézoïdale, une pointe du triangle ou un côté étroit du trapèze étant orienté en section vers l'axe central de l'élément de palier de support (10) et la base opposée étant disposée sur la circonférence extérieure de l'élément de palier de support (10).

3. Vis d'extrudeuse (100) selon la revendication 1 ou 2, **caractérisée en ce que** sur la circonférence extérieure de l'élément de palier de support (10) au moins un alésage radial est introduit par vis satellite (20), lequel s'étend jusqu'à la rainure (15) pour le pignon d'entraînement (21) ou jusqu'au logement de palier (16).

4. Extrudeuse à plusieurs vis (200), comprenant au moins un carter d'extrudeuse (240) avec un alésage d'extrudeuse (241), dans lequel une vis d'extrudeuse (100) selon au moins l'une quelconque des revendications précédentes est montée de manière rotative.

5. Extrudeuse à plusieurs vis (200) selon la revendication 4, **caractérisée en ce qu'**un interstice annulaire est formé entre la circonférence extérieure de la vis d'extrudeuse (100) dans la zone d'entraînement et la circonférence intérieure de l'alésage d'extrudeuse (241), dont la largeur radiale est jusqu'à 5 mm.

6. Extrudeuse à plusieurs vis (200) selon la revendication 4 ou 5, **caractérisée en ce qu'**un interstice annulaire est formé entre la circonférence extérieure de la vis d'extrudeuse (100) dans la zone d'entraînement et la circonférence intérieure de l'alésage d'extrudeuse (241), dont la surface de section est au maximum de 20 % de la somme de toutes les surfaces de section des canaux d'écoulement (13).

7. Extrudeuse à plusieurs vis (200) selon l'une quelconque des revendications 4 à 6, **caractérisé en ce que** la denture intérieure est formée sur une bague de stator (244), qui est insérée dans la zone d'entraînement dans l'alésage d'extrudeuse (241), et **en ce qu'**un anneau de retenue (245) limitant l'interstice annulaire est disposé dans la direction longitudinal devant la bague de stator (244).
